# EUROPÄISCHE PATENTSCHRIFT

(11) **EP 1 770 225 B1**
(45) Veröffentlichungstag und Bekanntmachung des Hinweises auf die Patenterteilung: **10.03.2010**
(21) Anmeldenummer: 06014360.9
(22) Anmeldetag: 11.07.2006
(51) Int. Cl.: E03C 1/086, F16L 21/03, F16L 23/22, F16L 19/02, F16L 15/04, F16J 15/10, F16J 15/12

(54) **Sanitärer Leitungsanschluß mit formschlüssig gehaltenem Dichtungsring**
Sanitary pipe joint with positive-fitted sealing ring
Raccordement pour tuyaux sanitaires avec un joint annulaire maintenu en place par liaison de forme

(30) Priorität: 29.09.2005 DE 102005046674
(43) Veröffentlichungstag der Anmeldung: 04.04.2007
(73) Patentinhaber: Neoperl GmbH, 79379 Müllheim (DE)
(72) Erfinder: Stein, Alexander, 79241 Ihringen (DE); Kunze, Joachim, 79379 Müllheim (DE)
(74) Vertreter: Maucher, Wolfgang

(56) Entgegenhaltungen:
- DE-A1- 3 000 799
- GB-A- 431 097
- US-A- 1 917 553

## Beschreibung

Die Erfindung betrifft einen sanitären Leitungsanschluss, der zumindest in seinem einen Stirnendbereich hülsenförmig ausgebildet ist und im Hülseninneren dieses hülsenförmigen Stirnendbereichs ein Innengewinde trägt zum Anschluss an einen zuströmseitigen Leitungsabschnitt, wobei zwischen dem benachbarten Leitungsabschnitt und dem Leitungsanschluss zumindest ein Dichtring im Stirnendbereich dichtend eingespannt ist, der zumindest ein in den Stirnendbereich eingesetztes Einsetzteil im Hülseninneren sichert, und wobei das zumindest eine Einsetzteil einen Strahlregler aufweist oder als Strahlregler ausgebildet ist, der in das Hülseninnere des als hülsenförmiges Auslaufmundstück ausgebildeten und am Wasserauslass einer sanitären Auslaufarmatur montierbaren Leitungsanschlusses einsetzbar ist.

Aus der DE 30 00 799 A1 (vgl. dort Fig.1) ist bereits ein Strahlregler bekannt, der in ein Auslaufmundstück einsetzbar ist, welches am Armaturenauslauf einer sanitären Auslaufarmatur befestigt werden kann. Der vorbekannte Strahlregler ist dazu als Einsetzpatrone ausgebildet, die von der Zuströmseite aus in das Hülseninnere des Auslaufmundstücks eingeschoben werden kann. Das Auslaufmundstück weist ein Innengewinde auf, welches mit einem Außengewinde am Armaturenauslauf zusammenwirkt. Im Hülseninneren des Auslaufmundstücks ist ein Dichtring vorgesehen, der zur axialen Abdichtung den zuströmseitigen Stirnrand der Einsetzpatrone beaufschlagt und somit zwischen dem Auslaufmundstück einerseits und dem benachbarten Stirnrand der Auslaufarmatur andererseits eingespannt werden kann.

Der Strahlregler und das dazugehörige Auslaufmundstück werden meist zusammen in einer gemeinsamen Verpackung angeboten. Beim Handling und Transport dieser vergleichsweise großen Verpackungen besteht jedoch die Gefahr, dass der Dichtring, der Strahlregler und das Auslaufmundstück sich voneinander trennen und auch der als Einsetzpatrone ausgebildete Strahlregler in seine Bestandteile auseinanderfallen kann. Dies und der Umstand, dass die ineinander gesetzten Bestandteile eine definierte Relativposition dieser Bestandteile einerseits und der Auslaufarmatur andererseits erfordern, können den Zusammenbau eines entsprechenden sanitären Wasserauslaufs nicht unwesentlich erschweren.

Aus der US-A-1 917 553 kennt man bereits einen Leitungsanschluss, der zur Verbindung von zwei Leitungsrohren vorgesehen ist. Dabei ist an dem Rohrende des einen Leitungsrohres ein Außengewinde vorgesehen, das in ein Innengewinde im Rohrinneren des anderen Rohrendes einschraubbar ist. Um diese Leitungsrohre im Bereich ihres gemeinsamen Leitungsanschlusses nach außen hin abdichten zu können, ist ein Dichtring vorgesehen, der zwischen den ineinander geschraubten Rohrenden dicht eingespannt ist. Damit dieser Dichtring unverlierbar im Rohrinneren des das Innengewinde aufweisenden Rohrendes gehalten ist, sind am Ringumfang des Dichtrings Haltenocken oder dergleichen Haltevorsprünge vorgesehen, die in zugeordnete Rohröffnungen am Rohrumfang eingreifen.

Aus der GB 431 097 kennt man bereits einen Schraubverschluss, der zum dichten Verschließen eines Rohrstutzens bestimmt ist. Der vorbekannte Schraubverschluss ist dazu beispielsweise topfförmig ausgebildet und weist ein Innengewinde auf, das auf ein Außengewinde am Stutzenende des Rohrstutzens aufschraubbar ist. Zum Abdichten des vorbekannten Schraubverschlusses ist ein Dichtring vorgesehen, der an seinem Ringumfang ebenfalls Haltenocken oder dergleichen Haltevorsprünge hat. Damit der Dichtring im topfförmigen Schraubverschluss unverlierbar gehalten ist und dicht zwischen dem Topfboden des Schraubverschlusses und dem stirnseitigen Stirnende des Rohrstutzens eingespannt werden kann, ist zwischen dem Topfboden und dem im Inneren des Schraubverschlusses vorgesehenen Innengewinde eine umlaufende Nut vorgesehen, in die der Dichtring mit seinen Haltevorsprüngen eingreift.

Aus der US-A-1 917 553 und der GB 431 097 wird somit deutlich, dass der vorbekannte Stand der Technik zwar die unverlierbare Befestigung eines Dichtringes in hülsen- oder topfförmigen Leitungsabschnitten mittels am Ringumfang des Dichtringes vorstehenden Haltenocken oder dergleichen Haltevorsprüngen lehrt, jedoch greift die an den vorbekannten Dichtringen vorgesehenen Haltevorsprünge stets in eine spezielle Nut oder eine spezielle Rohröffnung ein. Darüber hinaus ist keiner der vorbekannten Dichtringe dazu bestimmt, nachfolgende Einsetzteile im Hülsen- oder Topfinneren zu sichern und damit die Handhabung eines sanitären Leitungsanschlusses zu vereinfachen, zumal sich bei nachfolgenden Einsetzteilen auf Grund der Fertigungstoleranzen die Haltvorsprünge und die zugeordneten Nuten, Öffnungen oder dergleichen Aussparungen nicht immer ohne Weiteres finden werden.

Es besteht daher die Aufgabe, einen sanitären Leitungsanschluss der eingangs erwähnten Art zu schaffen, dessen Handhabung, insbesondere bei der Montage, wesentlich vereinfacht ist.

Die erfindungsgemäße Lösung dieser Aufgabe besteht darin, dass am Außenumfang des Dichtringes zumindest ein Haltevorsprung vorsteht, welcher Haltevorsprung in das Innengewinde im Hülseninneren des hülsenförmigen Stirnendbereichs eingreift, und dass der zumindest eine Haltevorsprung eine Höhe (h) aufweist, die kleiner als die lichte Höhe (H) eines Gewindeganges des Innengewindes ist.

Der zumindest eine Dichtring des erfindungsgemäßen Leitungsanschlusses weist wenigstens einen Haltevorsprung auf. Der wenigstens eine Haltevorsprung steht am Außenumfang des zumindest einen Dichtrings derart vor, dass der Haltsvorsprung in die am hülsenförmigen Stirnendbereich des Leitungsanschlusses vorgesehene Einformung oder dergleichen Aussparung eingreifen und sich dort festklemmen kann. Auf diese Weise ist der Dichtring und mit ihm die im Hülseninneren des Leitungsanschlusses zusätzlich vorgesehenen Bestandteile derart gesichert, dass sich diese Bestandteile nicht unbeabsichtigt beispielsweise durch transportbedingte Erschütterungen lösen - , bei Bedarf aber dennoch leicht voneinander getrennt werden können. Der erfindungsgemäße Leitungsanschluss zeichnet sich daher durch seine einfache Handhabung, insbesondere bei der Montage, aus.

Der erfindungsgemäße Leitungsanschluss weist zumindest einen Dichtring auf, der zwischen dem benachbarten Leitungsabschnitt und dem Leitungsanschluss dichtend eingespannt ist und der das zumindest eine Einsetzteil im Hülseninneren sichert, wobei am Außenumfang des Dichtrings zumindest ein Haltevorsprung vorsteht, der in das Innengewinde im Hülseninneren des hülsenförmigen Stirnendbereichs eingreift. Dabei wird das sanitäre Einsetzteil, das möglichst lose im Auslaufmundstück sitzen soll, für Montage- und insbesondere für Transportzwecke durch die sich am Innenumfang des Leitungsanschlusses verklemmende Dichtung verliersicher in seiner Position gehalten. Andererseits ist die Lagefixierung auch nur so stark, dass das zumindest eine Einsetzteil von Endkunden ohne allzu großen Kraftaufwand aus dem Auslaufmundstück gedrückt werden kann, was insbesondere bei Strahlregler-Innenteilen mit eingelegten Sieben von großer Bedeutung ist. Wird hierzu fest von der Unterseite auf die Auslauffläche gedrückt, können die Siebe verformt und die Funktionalität des Strahlreglers zerstört werden. Durch die Haltevorsprünge am Außenumfang des Dichtrings und durch deren geometrische Gestalt kann die Haltekraft relativ einfach bestimmt werden. Zwar wäre es auch möglich, den kompletten Dichtring im Übermaß herzustellen und beim Montageprozess fest in das Innengewinde hineinzudrücken, jedoch ist die Haltewirkung für die im Leitungsanschluss befindlichen Einsetzteile so groß, dass diese bei einem Wechsel durch den Endverbraucher auch kaum durch Drücken auf die Einsetzteile von der Auslaufseite her demontiert werden können, um diese Einsetzteile beispielsweise zu reinigen oder auszutauschen. Durch den erfindungsgemäß ausgestalteten Dichtring kann die Verpackung der Bauteile, die normalerweise sicherstellen soll, dass der Strahlregler und dessen Einsetzteile sowie die lose eingelegten Dichtungen auch auf langen Transportwegen nicht aus dem Mundstück herausfallen, deutlich vereinfacht werden. Beim Armaturenhersteller hat die Verwendung des erfindungsgemäßen Leitungsanschlusses mit seinem speziell ausgestalteten Dichtring auch den Vorteil, dass die Montage von kompletten Strahlreglern an der Auslaufarmatur auch mit dem Gewinde nach unten beziehungsweise der Auslauföffnung nach oben erfolgen kann. Diese Montageweise wird weitläufig verwendet, da sie aufgrund von ergonomischen Gesichtspunkten günstiger ist. Voraussetzung ist jedoch stets, dass beim Umdrehen des Strahlreglers die zuströmseitig benötigte Dichtung nicht nach unten herausfällt.

Damit der Dichtring gleichzeitig auch eine axiale Abdichtung im Bereich des Leitungsanschlusses sicherstellen kann, ist es zweckmäßig, wenn der Dichtring den zuströmseitigen Stirnrand des in das Hülseninnere des sanitären Leitungsanschlusses eingesetzten Einsetzteiles dichtend beaufschlagt.

Um den Dichtring mit ausreichender Klemmwirkung im Hülseninneren des beispielsweise als Auslaufmundstück ausgestalteten Leitungsanschlusses sichern zu können, ist es vorteilhaft, wenn über den Außenumfang des Dichtrings zumindest zwei Haltevorsprünge verteilt angeordnet sind. Damit der Dichtring sich besonders gut in der vorzugsweise als Innengewinde ausgestalteten Einformung am Innenumfang des Leitungsanschlusses festklemmen kann, ist es vorteilhaft, wenn zumindest ein Haltevorsprung wenigstens auf einer Seite in Längsrichtung, vorzugsweise beidseits, gerundete oder abgeschrägte freie Außenränder aufweist.

Weiterbildungen gemäß der Erfindung sind in weiteren Unteransprüchen und in der Beschreibung aufgeführt. Nachstehend wird die Erfindung anhand eines bevorzugten Ausführungsbeispieles noch näher erläutert und beschrieben.

Es zeigt:
- Fig. 1: einen im einem Auslaufmundstück befindlichen Strahlregler in einem Teil-Längsschnitt, wobei der Strahlregler mit Hilfe eines Dichtrings im Auslaufmundstück gesichert ist, der mittels außenumfangsseitig vorstehenden Haltenocken in ein Innengewinde am Auslaufmundstück eingreift,
- Fig. 2: den Strahlregler aus Fig.1 in einer Detaildarstellung im Bereich seines Dichtrings,
- Fig. 3: den Dichtring des Strahlreglers aus Fig.1 und 2 in einer perspektivischen Darstellung,
- Fig. 4: den Dichtring aus Fig.3 in einer Draufsicht und
- Fig. 5: den Dichtring aus Fig.4 in einer Seitenansicht.

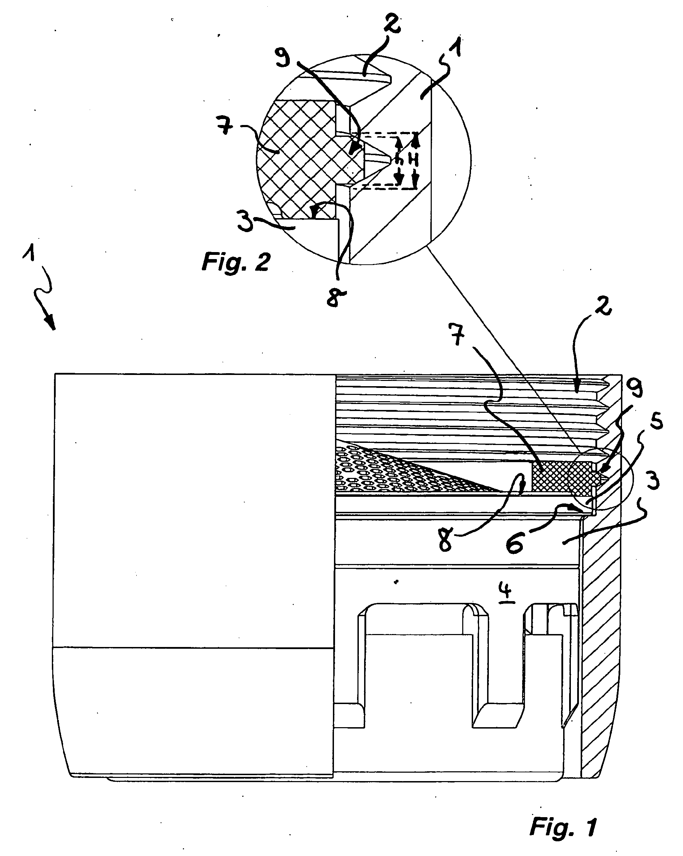

In Fig. 1 ist ein sanitärer Leitungsanschluss dargestellt, der hier als Auslaufmundstück 1 ausgebildet ist. Das Auslaufmundstück 1 ist auch in seinem zuströmseitigen Stirnendbereich hülsenförmig ausgebildet und weist im Hülseninneren dieses Stirnendbereiches ein Innengewinde 2 auf, dass am Außengewinde einer hier nicht weiter dargestellten sanitären Auslaufarmatur lösbar befestigbar ist.

Aus Fig.1 wird deutlich, dass in das Auslaufmundstück 1 ein sanitäres Einsetzteil einsetzbar ist, welches hier durch einen belüfteten Strahlregler 3 gebildet wird. Der Strahlregler 3 weist an seinem Strahlreglergehäuse 4 einen Ringflansch 5 auf, der in Gebrauchsstellung auf einem Ringabsatz 6 im Hülseninneren des Auslaufmundstückes 1 aufliegt.

Um die Trennebene zwischen dem Strahlregler 3 und dem zuströmseitig vorgeschalteten Leitungsabschnitt in axialer Richtung abdichten zu können, ist ein Dichtring 7 vorgesehen, der ebenfalls in das Hülseninnere des Auslaufmundstücks 1 eingesetzt ist. Dieser Dichtring 7 beaufschlagt den zuströmseitigen Stirnrand 8 des Strahlreglers 3 dichtend und ist zwischen dem Auslaufmundstück 1 und dem benachbarten Wasserauslauf der vorgeschalteten Auslaufarmatur eingespannt.

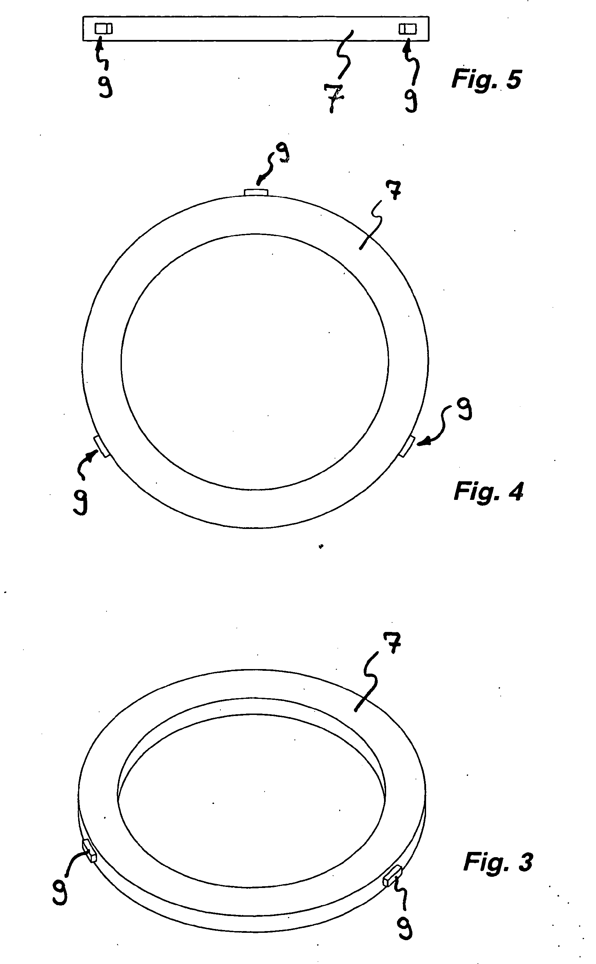

Aus einem Vergleich der Fig.1 bis 5 wird deutlich, dass der Dichtring 7 drei Haltenocken 9 aufweist, die am Außenumfang des Dichtrings 7 vorstehen und über den Umfang gleichmäßig verteilt angeordnet sind. In Fig.2 ist erkennbar, dass die Haltevorsprünge 9 eine Höhe h aufweisen, die kleiner ist als die lichte Höhe H eines Gewindeganges des Innengewindes 2. Die Haltevorsprünge 9 können somit derart sicher und fest in das Innengewinde 2 im Hülseninneren des Auslaufmundstücks 1 eingreifen, dass der Dichtring 7 und mit ihm auch der davon abströmseitig angeordnete Strahlregler 3 verliersicher gehalten sind. In Fig.2 ist angedeutet, dass der Dichtring Haltevorsprünge hat, die beidseits in Längsrichtung des Leitungsanschlusses gerundete oder abgeschrägte freie Außenränder aufweist.

Die am Außenumfang des Dichtrings einstückig angeformten Haltenocken 9 greifen derart in das Innengewinde 2 im Hülseninneren des hülsenförmigen Stirnendbereichs des Auslaufmundstücks 1 ein, dass der Dichtring 7 und mit ihm die im Hülseninneren des Auslaufmundstückes zusätzlich vorgesehenen Bestandteile derart gesichert sind, dass sich diese Bestandteile nicht unbeabsichtigt beispielsweise durch transportbedingte Erschütterungen lösen können.

## Patentansprüche

1. Sanitärer Leitungsanschluss, der zumindest in seinem einen Stirnendbereich hülsenförmig ausgebildet ist und im Hülseninneren dieses hülsenförmigen Stirnendbereichs ein Innengewinde (2) trägt zum Anschluss an einen zuströmseitigen Leitungsabschnitt, wobei zwischen dem benachbarten Leitungsabschnitt und dem Leitungsanschluss zumindest ein Dichtring (7) im Stirnendbereich dichtend eingespannt ist, der zumindest ein in den Stirnendbereich eingesetztes Einsetzteil im Hülseninneren sichert, und wobei das zumindest eine Einsetzteil einen Strahlregler aufweist oder als Strahlregler (3) ausgebildet ist, der in das Hülseninnere des als hülsenförmiges Auslaufmundstück ausgebildeten und am Wasserauslass einer sanitären Auslaufarmatur montierbaren Leitungsanschlusses einsetzbar ist, **dadurch gekennzeichnet, dass** am Außenumfang des Dichtringes (7) zumindest ein Haltsvorsprung (9) vorsteht, welcher Haltevorsprung (9) in das Innengewinde im Hülseninneren des hülsenförmigen Stirnendbereichs eingreift, und dass der zumindest eine Haltevorsprung (9) eine Höhe (h) aufweist, die kleiner als die lichte Höhe (H) eines Gewindeganges des Innengewindes (2) ist.

2. Leitungsanschluss nach Anspruch 1, **dadurch gekennzeichnet, dass** der Dichtring (7) den zuströmseitigen Stirnrand des in das Hülseninnere des sanitären Leitungsanschlusses eingesetzten Einsetzteiles (3) dichtend beaufschlagt.

3. Leitungsanschluss nach Anspruch 1 oder 2, **dadurch gekennzeichnet, dass** über den Außenumfang des Dichtrings (7) zumindest zwei Haltevorsprünge (9) verteilt angeordnet sind.

4. Leitungsanschluss nach Anspruch 3, **dadurch gekennzeichnet, dass** die Haltevorsprünge (9) am Außenumfang gleichmäßig verteilt angeordnet sind.

5. Leitungsanschluss nach einem der Ansprüche 1 bis 4, **dadurch gekennzeichnet, dass** der zumindest eine Haltevorsprung (9) wenigstens auf einer Seite in Längsrichtung, vorzugsweise beidseits, gerundete oder abgeschrägte freie Außenränder aufweist.

## Claims

1. Sanitary pipe connection which is of sleeve-shaped construction at least at its end face region and inside the sleeve of this sleeve-shaped end face region comprises an internal thread (2) for connecting to a pipe section on the inflow side, while between the adjacent pipe section and the pipe connection at least one gasket ring (7) is sealingly clamped in the end face region, said gasket ring securing at least one insert member inserted in the end face region inside the sleeve, and wherein the at least one insert member has a flow regulator or is constructed as a flow regulator (3) which can be inserted inside the sleeve of the pipe connection that is embodied as a sleeve-shaped terminal mouthpiece and is adapted to be mounted on the water outlet of a sanitary outflow fitting, **characterised in that** at least one retaining projection (9) protrudes from the outer periphery of the gasket ring (7), said retaining projection (9) engaging in the internal thread inside the sleeve of the sleeve-shaped end face region, and **in that** the at least one retaining projection (9) has a height (h) which is less than the clear height (H) of a turn of the internal thread (2).

2. Pipe connection according to claim 1, **characterised in that** the gasket ring (7) forms a seal by acting on the end edge, closest to the inflow, of the insert member (3) that is inserted in the interior of the sleeve of the sanitary pipe connection.

3. Pipe connection according to claim 1 or 2, **characterised in that** at least two retaining projections (9) are distributed over the outer periphery of the gasket ring (7).

4. Pipe connection according to claim 3, **characterised in that** the retaining projections (9) are uniformly distributed over the outer periphery.

5. Pipe connection according to one of claims 1 to 4, **characterised in that** the at least one retaining projection (9) has rounded or bevelled free outer edges on at least one side in the longitudinal direction, preferably on both sides.

## Revendications

1. Raccordement pour conduites sanitaires, qui est réalisé en forme de douille au moins dans l'une de ses régions terminales frontales et qui porte, à l'intérieur de la douille de cette région terminale frontale en forme de douille, un filetage intérieur (2) pour le raccordement à un tronçon de conduite situé du côté amont, sachant qu'au moins un joint d'étanchéité annulaire (7) est, dans la région terminale frontale, maintenu par serrage en étanchéité entre le tronçon de conduite voisin et le raccordement pour conduites, joint qui assujettit à l'intérieur de la douille au moins une pièce d'insertion insérée dans la région terminale frontale, et sachant que la pièce d'insertion au moins unique présente un régulateur de jet ou est réalisée sous forme de régulateur de jet (3), qui peut être inséré à l'intérieur de la douille du raccordement pour conduites conçu comme embout de sortie en forme de douille et pouvant être monté sur la sortie d'eau d'une robinetterie sanitaire de sortie, **caractérisé en ce qu'**au moins une saillie de retenue (9) dépasse sur la périphérie extérieure du joint d'étanchéité annulaire (7), laquelle saillie de retenue (9) s'engage dans le filetage intérieur à l'intérieur de la douille de la région terminale frontale en forme de douille, et **en ce que** la saillie de retenue (9) au moins unique présente une hauteur (h) qui est inférieure à la hauteur libre (H) d'un filet du filetage intérieur (2).

2. Raccordement pour conduites sanitaires selon la revendication 1, **caractérisé en ce que** le joint d'étanchéité annulaire (7) sollicite en étanchéité le bord frontal côté amont de la pièce d'insertion (3) insérée à l'intérieur de la douille du raccordement pour conduites sanitaires.

3. Raccordement pour conduites sanitaires selon la revendication 1 ou 2, **caractérisé en ce qu'**au moins deux saillies de retenue (9) sont disposées réparties sur la périphérie extérieure du joint d'étanchéité annulaire (7).

4. Raccordement pour conduites sanitaires selon la revendication 3, **caractérisé en ce que** les saillies de retenue (9) sont disposées en étant uniformément réparties sur la périphérie extérieure.

5. Raccordement pour conduites sanitaires selon l'une des revendications 1 à 4, **caractérisé en ce que** la saillie de retenue (9) au moins unique présente au moins sur un côté en direction longitudinale, de préférence sur les deux côtés, des bords extérieurs libres arrondis ou chanfreinés.
